# EUROPÄISCHE PATENTSCHRIFT

(11) **EP 3 517 999 B1**
(45) Veröffentlichungstag und Bekanntmachung des Hinweises auf die Patenterteilung: **27.01.2021**
(21) Anmeldenummer: 18212556.7
(22) Anmeldetag: 14.12.2018
(51) Int. Cl.: G01S 17/42, G01S 7/481

(54) **OPTOELEKTRONISCHER SENSOR UND VERFAHREN ZUR ERFASSUNG VON OBJEKTEN**
OPTOELECTRONIC SENSOR AND METHOD FOR DETECTING OBJECTS
CAPTEUR OPTOÉLECTRONIQUE ET PROCÉDÉ DE DÉTECTION D'OBJETS

(30) Priorität: 26.01.2018 DE 102018101846
(43) Veröffentlichungstag der Anmeldung: 31.07.2019
(73) Patentinhaber: SICK AG, 79183 Waldkirch (DE)
(72) Erfinder: Gimpel, Hartmut, 79194 Gundelfingen (DE); Hug, Gottfried, 79183 Waldkirch (DE); Clemens, Klaus, 79367 Weisweil (DE)

(56) Entgegenhaltungen:
- EP-A1- 2 375 266
- EP-A1- 3 168 641
- DE-A1- 19 827 125
- DE-A1-102015 121 839
- JP-A- 2007 003 355
- US-A1- 2005 243 053

## Beschreibung

Die Erfindung betrifft einen optoelektronischen Sensor und ein Verfahren zur Erfassung von Objekten in einem Überwachungsbereich nach dem Oberbegriff von Anspruch 1 beziehungsweise 13.

Viele optoelektronische Sensoren arbeiten nach dem Tastprinzip, bei dem ein Lichtstrahl in den Überwachungsbereich ausgesandt und der von Objekten zurückgeworfene Lichtstrahl wieder empfangen wird, um dann das Empfangssignal elektronisch auszuwerten. Dabei wird oft die Lichtlaufzeit mit einem bekannten Phasen- oder Pulsverfahren gemessen, um den Abstand eines angetasteten Objekts zu bestimmen.

Um den Messbereich eines einstrahligen Lichttasters zu erweitern, kann einerseits der Abtaststrahl bewegt werden, wie dies in einem Laserscanner geschieht. Dort überstreicht ein von einem Laser erzeugter Lichtstrahl mit Hilfe einer Ablenkeinheit periodisch den Überwachungsbereich. Zusätzlich zu der gemessenen Abstandinformation wird aus der Winkelstellung der Ablenkeinheit auf die Winkellage des Objektes geschlossen, und damit ist der Ort eines Objektes in dem Überwachungsbereich in zweidimensionalen Polarkoordinaten erfasst.

Eine andere Möglichkeit zur Messbereichserweiterung und zur Gewinnung zusätzlicher Abstandsdaten besteht darin, zugleich mehrere Messpunkte mit mehreren Abtaststrahlen zu erfassen. Das lässt sich auch mit einem Laserscanner kombinieren, der dann nicht nur eine Überwachungsebene erfasst, sondern über eine Vielzahl von Überwachungsebenen einen dreidimensionalen Raumbereich. In den meisten Laserscannern wird die Abtastbewegung durch einen Drehspiegel erreicht. Gerade bei Verwendung mehrerer Abtaststrahlen ist aber im Stand der Technik auch bekannt, stattdessen den gesamten Messkopf mit Lichtsendern und Lichtempfängern rotieren zu lassen, wie dies beispielsweise in DE 197 57 849 B4 beschrieben ist.

Prinzipiell lassen sich mehrere Abtaststrahlen durch Vervielfältigung der Bauteile eines einstrahligen Geräts erreichen. Das ist aber unnötig aufwändig und komplex. Daher gibt es im Stand der Technik Ansätze, Bauteile mehrfach zu nutzen. So werden in der DE 10 2015 121 839 A1 die Abtaststrahlen mehrerer Lichtsender durch eine gemeinsame Sendeoptik geformt und in die gewünschte Richtung abgelenkt. Dabei entsteht aber ein weiteres Problem, denn die Sendeoptik muss nun auch Objektpunkte scharf abbilden, die nicht exakt geradeaus auf der optischen Achse liegen. Mit anderen Worten müsste die Sendeoptik auch mit einem Feldwinkel >0° umgehen können. Das wiederum kollidiert mit der Anforderung, die Optik einfach zu halten, vorzugsweise lediglich eine Einzellinse zu verwenden. Denn eine Einzellinse weist unvermeidliche Abbildungsfehler auf, wobei hier vor allem deren Bildfeldkrümmung relevant ist.

Ein möglicher Ausweg ist, den Feldwinkel auf Werte nahe 0° einzuschränken, so dass die Bildfeldkrümmung klein bleibt. Damit können mit derselben Optik aber auch nur dicht liegende Abtaststrahlen realisiert werden. Bei einem sinnvollen gegenseitigen Abstand von einigen Grad und einem auf beispielsweise <5° beschränkten Feldwinkel erlaubt eine gemeinsame Optik nicht mehr als zwei oder drei Abtaststrahlen. Für mehr Abtaststrahlen und einen größeren Messbereich von beispielsweise 30° bedarf es doch wieder mehrerer Optiken.

Andererseits besteht auch die Möglichkeit, auf eine einfache Optik zu verzichten und ein mehrlinsiges Objektiv zu verwenden, wodurch die Abbildungsfehler reduziert sind. Das ist dann deutlich teurer und muss in sich justiert werden. Meist ist auch nur ein kleineres Öffnungsverhältnis erreichbar, denn eine Blendenzahl unterhalb von 2 ist mit einem Objektiv nur schwer erzielbar, meist erreicht man sogar nur eine Blendenzahl von etwa 3. Dies erlaubt aber nur eine verkleinerte Empfangsapertur und reduziert daher die Reichweite des Gerätes. Typische Einzellinsen dagegen können Blendenzahlen von 1 haben.

Die EP 3 182 153 A1 schlägt vor, die Fläche mit den Lichtsendern oder Lichtempfängern effektiv zu krümmen. Das schafft einen zusätzlichen Optimierungsgrad unabhängig von den eigentlichen optischen Elementen, erfordert aber dennoch Zusatzteile oder eine zusätzliche Bearbeitung.

Die DE 101 143 62 C2 offenbart ein Laserscan-System. In einer Ausführungsform sind vier zusätzliche Lasersender vorgesehen, um eine Precrashinformation zu gewinnen. Diese Lasersender nutzen aber jeweils eigene Optiken.

In einem Laserscanner nach EP 2 381 268 A1 werden vier VCSEL-Laserdioden als Lichtsender eingesetzt. Es handelt sich aber dennoch um kein Mehrstrahlsystem, denn effektiv erzeugen die vier VCSEL-Laserdioden nur einen gemeinsamen Abtaststrahl, und dementsprechend gibt es nur einen einzigen Empfänger. Eine gemeinsame Sendeoptik ist auch nicht vorgesehen.

Aus der US 2005/0243053 A1 ist ein Eingabegerät für Computer bekannt, das einer inversen optischen Maus gleicht, die aber nicht auf optischem Fluss, sondern auf selbstmischender Interferenz basiert. Ein von einem Laser ausgesandter Lichtstrahl trifft auf den Finger des Benutzers, und das durch die Bewegung dopplerverschobene remittierte Licht interferiert in der Kavität des Lasers mit dessen Sendelicht. Die dadurch erzeugte Intensitätsmodulation wird von einer rückwärtig an dem Laser angebrachten Photodiode beobachtet, um über eine Auswertung der Dopplerverschiebung die Bewegung des Fingers zu bestimmen. In einer Ausführungsform sind zwei Paare aus Laser und Photodiode mit gemeinsamer Linse vorgesehen, um die Bewegung in X-Richtung und Y-Richtung zu unterscheiden, in einer weiteren Ausführungsform kommt ein drittes Paar hinzu, um auch Bewegungen in Z-Richtung als Mausklick zu erfassen.

Die JP 2007-003355 A offenbart eine Vorrichtung zur Messung einer Pulslichtlaufzeit, die beispielsweise als virtuelle Maus genutzt werden kann.

Die DE 198 27 125 A1 beschreibt eine Einrichtung zur Erzeugung paralleler kollimierter Strahlenbündel aus fasergekoppelten Laserdioden, wobei das Licht in einem Lichtteiler- und Modulatorbaustein in zwei Sendefasern aufgeteilt wird. Die Einrichtung wird beispielsweise in einem Laser-Doppler-Gerät verwendet, in dem die rückgestreuten Strahlenbündel mittels einer APD beobachtet werden.

In der EP 2 375 266 A1 wird ein Laserscanner beschrieben, bei dem der Lichtsender außeraxial zur Drehachse versetzt ist und dadurch während der Rotation des Drehspiegels die Empfangsoptik umläuft.

Es ist daher Aufgabe der Erfindung, ein gattungsgemäßes Mehrstrahlsystem zu vereinfachen und zu verbessern.

Diese Aufgabe wird durch einen optoelektronischen Sensor und ein Verfahren zur Erfassung von Objekten in einem Überwachungsbereich nach Anspruch 1 beziehungsweise 13 gelöst. Der erfindungsgemäße Sensor ist ein Mehrfachtaster, der mit mindestens einem Lichtsender mehrere Lichtstrahlen von jeweils einem Sendepunkt aussendet. Jeder Sendepunkt ist effektiv ein Lichtsender, von dem der jeweilige ausgesandte Lichtstrahl ausgeht, wobei aber zunächst nicht zwingend erforderlich ist, dass an den Sendepunkten physische Lichtsender sitzen. Stattdessen kann in einigen Ausführungsformen auch ein physischer Lichtsender mehrere ausgesandte Lichtstrahlen an mehreren oder allen Sendepunkten erzeugen, wie später noch erläutert wird. Die ausgesandten Lichtstrahlen sind weiterhin nicht als Strahlen im Sinne der Strahlenoptik innerhalb eines größeren Lichtbündels zu verstehen, sondern als voneinander separierte Lichtbündel und somit vereinzelte Abtaststrahlen, die im Überwachungsbereich beim Auftreffen auf ein Objekt entsprechend vereinzelte, voneinander beabstandete Lichtflecken erzeugen.

Mindestens ein Lichtempfänger ist in der Lage, ein jeweiliges Empfangssignal aus den aus unterschiedlicher Richtung remittierten Lichtstrahlen zu erzeugen, die an den Objekten zurückgeworfen werden und in einem jeweiligen Empfangspunkt auftreffen. Ähnlich den Ausführungen zu den Sendepunkten sind die Empfangspunkte effektiv Lichtempfänger, ohne dass physisch an jedem Empfangspunkt ein Lichtempfänger sitzen muss. Die derart erzeugten Empfangssignale werden ausgewertet, um Informationen über das Objekt zu gewinnen.

Die ausgesandten Lichtstrahlen durchlaufen eine gemeinsame Sendeoptik, die beispielsweise dafür sorgt, dass die ausgesandten Lichtstrahlen eine gewünschte Strahlform, eine klare Separation voneinander oder bestimmte Strahlrichtungen aufweisen. Entsprechendes gilt für die remittierten Lichtstrahlen und deren gemeinsame Empfangsoptik.

Die Erfindung geht nun von dem Grundgedanken aus, die Sendepunkte auf einer ersten Kreislinie und/oder die Empfangspunkte auf einer zweiten Kreislinie anzuordnen. Das erscheint insbesondere für einen Laserscanner auf den ersten Blick widersinnig, da dort eine eindimensionale Anordnung auf einer einfachen Linie genügen würde, mit der dann durch die Drehbewegung eine Ebenenschar abgetastet wird. Die Kreislinien ermöglichen jedoch, die Auswirkungen der einleitend angesprochenen Abbildungsfehler zu reduzieren und die Bildfeldkrümmung praktisch auszuschalten.

Die Erfindung hat den Vorteil, dass weitgehend ohne Einschränkungen durch Bildfeldkrümmung auch größere Feldwinkel und damit Abstände der Lichtstrahlen möglich werden, trotz sehr einfachen Optiken. So werden auch mit einer Einzellinse bei hoher Qualität Feldwinkelbereiche von ±10° oder mehr zugänglich, entsprechend mehr Abtaststrahlen oder größere Winkelabstände dazwischen. Um einen noch größeren Winkelbereich von beispielsweise 30° abzudecken, genügen damit bereits wenige Sende-/ Empfangsmodule. Bei gleich großem Winkel zwischen den Lichtstrahlen werden deutlich kleinere Sende- und Empfangslichtflecken erzeugt. Das verringert die Anforderungen an die Justagegenauigkeit und die Lichtverluste, und es ermöglicht größere Reichweiten und kleinere Detektoren mit höherer Frequenzbandbreite. Im Vergleich zu Einzeloptiken kann eine gemeinsame und damit größere Optik Toleranzen besser ausgleichen, etwa schwankende Divergenzwinkel beziehungsweise Leistungsschwankungen bei temperatursensitiven VCSEL-Lichtquellen verringern.

Die erste Kreislinie ist um die optische Mittelachse der Sendeoptik und/oder die zweite Kreislinie um die optische Mittelachse der Empfangsoptik zentriert. Anders ausgedrückt verlaufen die optischen Mittelachsen der jeweiligen Optik durch den Kreismittelpunkt der Kreislinie. Dann erfahren bei üblichen rotationssymmetrischen Eigenschaften der Optik die Lichtstrahlen jeweils die gleichen Strahlformungs- und Ablenkungseffekte. Es muss also erfindungsgemäß gar nicht das Ziel sein, Optiken mit besonders kleinem Bildfeldkrümmungseffekt zu schaffen, was gerade bei Einzellinsen ohnehin physikalisch nicht möglich wäre. Vielmehr ist der Effekt der Kreisanordnung, dass die Lichtstrahlen den gleichen Abbildungsfehlern unterliegen beziehungsweise die Optik gerade für den einen relevanten Feldwinkel entsprechend der Kreislinie optimiert werden kann.

Die Ebene der ersten Kreislinie liegt bevorzugt senkrecht zur optischen Mittelachse der Sendeoptik und/oder die Ebene der zweiten Kreislinie senkrecht zur optischen Mittelachse der Empfangsoptik. Prinzipiell wäre auch denkbar, die genannte Ebene zu verkippen. Wegen der Scheimpflug-Bedingung sollte dies sende- wie empfangsseitig erfolgen. Betrachtet man dann die Anordnung der Sendepunkte beziehungsweise Empfangspunkte längs der optischen Mittelachse, so ergibt sich effektiv nicht zwingend ein Kreis, sondern möglicherweise eine Ellipse. Das bleibt grundsätzlich eine Anordnung auf einer Kreislinie im Sinne der Erfindung, da ja die physischen Positionen weiterhin auf einem Kreis liegen, aber die optischen Eigenschaften insgesamt sind ungünstiger als bei senkrechter Orientierung der Ebene.

Die Sendepunkte sind bevorzugt gleichmäßig auf der ersten Kreislinie und/oder die Empfangspunkte gleichmäßig auf der zweiten Kreislinie verteilt. Eine solche gleichmäßige Anordnung, bei dem die Sendepunkte beziehungsweise Empfangspunkte ein regelmäßiges n-Eck bilden, ist einfacher zu handhaben, insbesondere um gleiche Winkelabstände zwischen den Abtaststrahlen zu erhalten. Es bleibt aber auch eine unregelmäßige Verteilung auf der Kreislinie möglich, und dies schließt keineswegs aus, dennoch gleiche Winkelabstände zwischen den Abtaststrahlen einzustellen.

Der mindestens eine Lichtsender erzeugt vorzugsweise drei, fünf oder mehr Lichtstrahlen. Dementsprechend gibt es drei, fünf oder mehr Sendepunkte, remittierte Lichtstrahlen und Empfangspunkte. Negativ ausgedrückt beträgt die genannte Anzahl nicht zwei oder vier. Unter den vorteilhaften Anzahlen größer fünf sind als besonders vorteilhaft noch sechs, acht oder sechzehn zu nennen. Es sei wiederholt, dass sich die Anzahl auch auf ein Sende-/Empfangsmodul beziehen kann, von denen mehrere in einem optischen Sensor verbaut sein können. Die Gesamtzahl von Abtaststrahlen addiert sich dann aus den Anzahlen der verbauten Module, und so lassen sich weitere Anzahlen konstruieren.

Der mindestens eine Lichtsender erzeugt bevorzugt vier Lichtstrahlen, wobei die Sendepunkte und/oder die Empfangspunkte nicht zu einem Quadrat oder Rechteck angeordnet sind. An dieser Stelle ist genau die Anzahl vier gemeint, es ist keine Mindestangabe. Mit dem vorigen Absatz lässt sich die kombinierte Bedingung formulieren, dass vorzugsweise die Anzahl der Lichtstrahlen und damit Sende- beziehungsweise Empfangspunkte entweder nicht vier beträgt, oder falls doch vier, dann nicht in einer quadratischen oder rechteckigen Anordnung.

Der Sensor weist bevorzugt eine Vielzahl von Lichtsendern oder Lichtquellen, insbesondere einen Lichtsender je Sendepunkt, und/oder eine Vielzahl von Lichtempfängern oder Lichtempfangselementen auf, insbesondere einen Lichtempfänger je Empfangspunkt. Die ausgesandten Lichtstrahlen werden also zumindest teilweise, wenn nicht alle, unmittelbar durch eigene Lichtsender an den Sendepunkten erzeugt, und entsprechendes gilt für die remittierten Lichtstrahlen, Empfangspunkte und Lichtempfänger.

Die Lichtsender und/oder Lichtempfänger bilden bevorzugt ein Bauteil mit einer Grundfläche, insbesondere einer rechteckigen oder quadratischen Grundfläche, wobei die Grundflächen zumindest teilweise gegenüber einem Durchmesser der Kreislinie oder gegeneinander verdreht sind. Physische Lichtsender beziehungsweise Lichtempfänger bestehen nicht nur aus einer punktförmigen Emissionsfläche oder Empfangsfläche, sondern es sind Halbleiterbauelemente mit einer darüber hinausgehenden Ausdehnung. Diese Grundfläche ist typischerweise quadratisch oder rechteckig, und dann kann die Grundfläche einer gewünschten Anordnung auf der Kreislinie im Weg stehen. Das wiederum lässt sich dann durch geschickte verdrehte Anordnungen wieder umgehen. Die Grundflächen können gegeneinander verdreht werden, aber auch gegen einen äußeren Bezug der Kreislinie, etwa einen Durchmesser, welcher sich an einer Drehachse eines Laserscanners orientiert. Die Grundflächen liegen dann nicht horizontal oder vertikal zu einer Scanebene, sondern dagegen verdreht.

Dem Lichtsender ist bevorzugt ein Strahlteilerelement zugeordnet, um dessen Licht in mehrere ausgesandte Lichtstrahlen aufzuspalten. So ist ein einziger physischer Lichtsender für mehrere oder sogar alle Sendepunkte zuständig. Denkbar ist auch, das Licht mehrere physischer Lichtsender aufzuspalten, beispielsweise sechs Sendepunkte aus zwei Lichtsendern mit dreifach aufgespaltenem Lichtstrahl zu erhalten.

Der Lichtsender ist bevorzugt dafür ausgebildet, mehrere voneinander separierte Lichtstrahlen nacheinander durch Bewegen eines Lichtstrahls an mehrere, insbesondere alle Sendepunkte zu erzeugen. Hier emuliert ein beweglicher Lichtsender mehrere Lichtsender an unterschiedlichen Sendepunkten. Die Bewegung kann auf unterschiedlichste Weise beispielsweise durch eine Mechanik, einen MEMS-Spiegel, ein optical phased array oder einen akusto-optischen Modulator entstehen.

Der Lichtempfänger ist bevorzugt ortsaufgelöst und weist mehrere aktive Bereiche an den Empfangspunkten auf. In dieser Ausführungsform ist derselbe Lichtempfänger für mehrere oder sogar alle Empfangspunkte zuständig. Dafür weist der Lichtempfänger insbesondere eine Pixelmatrix auf, und nur das oder die Pixel an den Empfangspunkten werden genutzt, um ein Empfangssignal zu gewinnen. Die übrigen Pixel erzeugen möglicherweise auch Signale, die aber ignoriert oder nicht ausgelesen werden. Es ist auch denkbar, solche Pixel ganz zu deaktivieren, etwa in einer SPAD-Matrix (Single-Photon Avalanche Diode) gezielt nur die Pixel an den Empfangspunkten oberhalb der Durchbruchspannung vorzuspannen.

Der Lichtempfänger weist bevorzugt nur ein lichtempfindliches Element auf, das mehrere oder alle Empfangspunkte abdeckt, wobei der Lichtsender für ein Multiplexing, bei dem jeweils nur einer der ausgesandten Lichtstrahlen aktiv ist, oder eine Codierung ausgebildet ist. Hier wird also das Licht aus mehreren oder sogar allen Empfangspunkten im selben Lichtempfänger gesammelt. Damit ist für die betroffenen Empfangspunkte keine Unterscheidung der remittierten Lichtstrahlen möglich, vielmehr wird dies durch sendeseitiges Multiplexing oder eine unterscheidbare Strahlcodierung, beispielsweise eine Pulscodierung erreicht.

Lichtsender und Lichtempfänger bilden bevorzugt eine koaxiale Anordnung, und Sendeoptik und Empfangsoptik sind in einer gemeinsamen Optik zusammengefasst. Das ergibt einen besonders kompakten Aufbau. Die gemeinsame Optik fungiert in einer Doppelrolle als Sende- und Empfangsoptik.

Die Sendeoptik und/oder die Empfangsoptik weist bevorzugt eine Linse auf. Die Optiken arbeiten folglich refraktiv, nicht beispielsweise reflexiv oder diffraktiv, was prinzipiell auch denkbar wäre. Noch bevorzugter besteht die Sendeoptik beziehungsweise Empfangsoptik aus der einen Linse. Das ergibt einen besonders einfachen Aufbau, in dem sich die Vorteile der Erfindung deutlich zeigen. Alternativ sind zusätzliche optische Elemente denkbar, beispielsweise eine sogenannte Landscape Lens aus einer Linse mit einer zugeordneten Blende, ein System aus zwei Linsen oder sogar eine Abbildungsoptik aus mehreren Linsen.

Der Sensor ist bevorzugt als Laserscanner ausgebildet und weist eine bewegliche Ablenkeinheit auf, mit deren Hilfe die ausgesandten Lichtstrahlen periodisch durch den Überwachungsbereich geführt werden. Wie einleitend erläutert, tastet der Laserscanner mit der Bewegung der beweglichen Ablenkeinheit den Überwachungsbereich in mehreren Ebenen ab. Die Ablenkeinheit ist vorzugsweise in Form einer drehbaren Abtasteinheit ausgebildet ist, die praktisch einen beweglichen Messkopf bildet, in dem zumindest der Lichtsender samt gemeinsamer Sendeoptik und möglicherweise auch Lichtempfänger und zumindest Teile der Auswertungseinheit untergebracht sind.

Die Auswertungseinheit ist erfindungsgemäß dafür ausgebildet, aus einer Lichtlaufzeit zwischen Aussenden der Lichtstrahlen und Empfangen der remittierten Lichtstrahlen einen Abstand des Objekts zu bestimmen. Der Sensor wird dadurch entfernungsmessend. Alternativ wird lediglich die Anwesenheit eines Objekts festgestellt und beispielsweise als Schaltsignal ausgegeben.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Schnittdarstellung eines als Laserscanner ausgebildeten optischen Sensors;
- Fig. 2a: eine beispielhafte Anordnung mehrerer Lichtsender oder Lichtempfänger auf einer Kreislinie in Draufsicht;
- Fig. 2b: eine Seitenansicht der Anordnung gemäß Figur 2a;
- Fig. 2c: eine perspektivische Ansicht der Anordnung gemäß Figur 2a;
- Fig. 3a: eine beispielhafte Anordnung von drei Lichtsendern oder Lichtempfängern mit rechteckiger Grundfläche;
- Fig. 3b: eine beispielhafte Anordnung von vier Lichtsendern oder Lichtempfängern;
- Fig. 3c: eine andere, nicht rechteckige oder quadratische Anordnung von vier Lichtsendern oder Lichtempfängern;
- Fig. 3d: eine beispielhafte Anordnung von sechs Lichtsendern oder Lichtempfängern;
- Fig. 3e: eine Anordnung ähnlich Figur 3d, jedoch mit verdrehten Grundflächen; und
- Fig. 3f: eine Anordnung von acht Lichtsendern oder Lichtempfängern mit quadratischer Grundfläche.

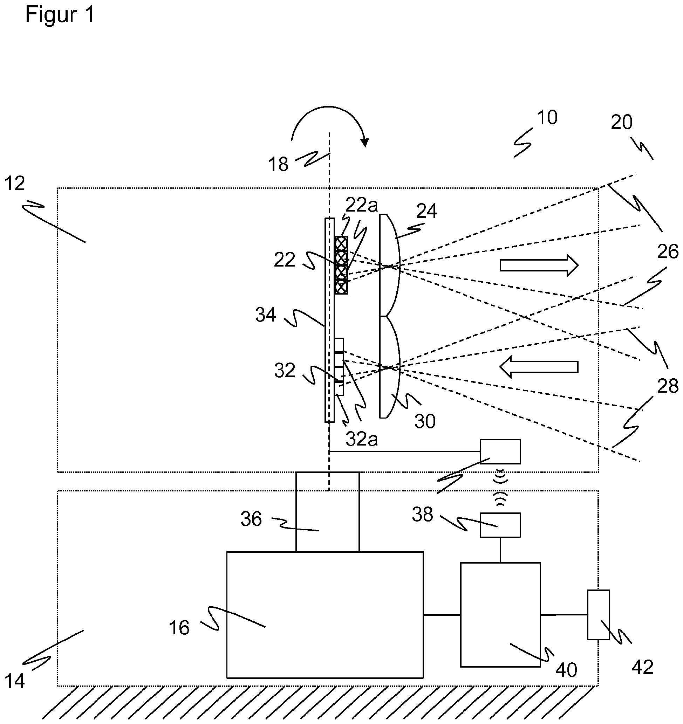

Figur 1 zeigt eine schematische Schnittdarstellung durch einen optoelektronischen Sensor 10 in einer Ausführungsform als Laserscanner. Der Sensor 10 umfasst in grober Aufteilung eine bewegliche Abtasteinheit 12 und eine Sockeleinheit 14. Die Abtasteinheit 12 ist der optische Messkopf, während in der Sockeleinheit 14 weitere Elemente wie eine Versorgung, Auswertungselektronik, Anschlüsse und dergleichen untergebracht sind. Im Betrieb wird mit Hilfe eines Antriebs 16 der Sockeleinheit 14 die Abtasteinheit 12 in eine Drehbewegung um eine Drehachse 18 versetzt, um so einen Überwachungsbereich 20 periodisch abzutasten.

In der Abtasteinheit 12 erzeugt ein Lichtsender 22 mit mehreren Lichtquellen 22a, beispielsweise LEDs oder Laser in Form von Kantenemittern oder VCSELs, mit Hilfe einer gemeinsamen Sendeoptik 24 mehrere Sendelichtstrahlen 26 mit gegenseitigem Winkelversatz, die in den Überwachungsbereich 20 ausgesandt werden. Treffen die Sendelichtstrahlen 26 in dem Überwachungsbereich 20 auf ein Objekt, so kehren entsprechende remittierte Lichtstrahlen 28 zu dem Sensor 10 zurück. Die remittierten Lichtstrahlen 28 werden von einer gemeinsamen Empfangsoptik 30 auf einen Lichtempfänger 32 mit mehreren Lichtempfangselementen 32a geführt, die jeweils ein elektrisches Empfangssignal erzeugen. Die Lichtempfangselemente 32a können separate Bauteile oder Pixel einer integrierten Matrixanordnung sein, beispielsweise Photodioden, APDs (Avalanche Diode) oder SPADs (Single-Photon Avalanche Diode).

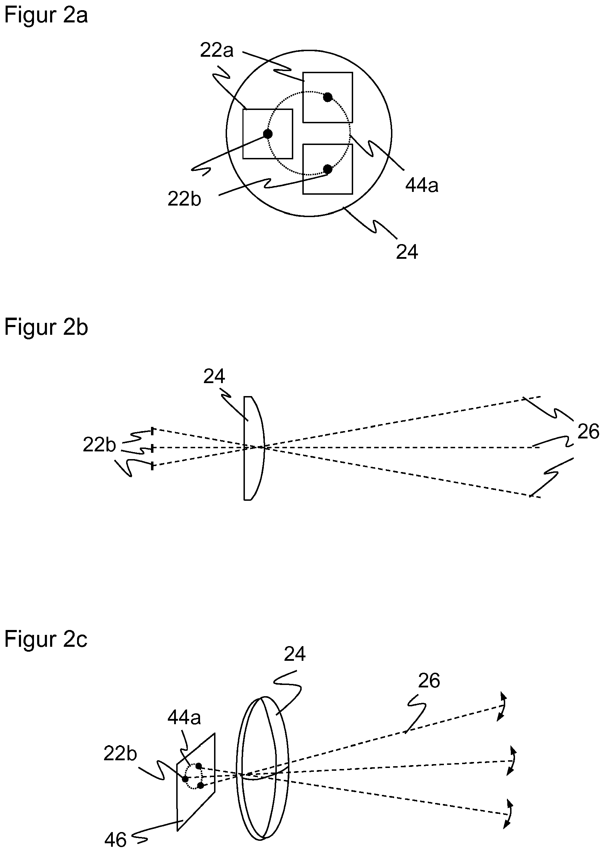

Die rein beispielhaft vier Lichtquellen 22a und Lichtempfangselemente 32a sind vereinfacht übereinander dargestellt. Erfindungsgemäß ist zumindest eine der Gruppen in Wirklichkeit in einer Kreisfigur beziehungsweise auf einer Kreislinie angeordnet. Das muss sich aber nicht auf physische Lichtquellen 22a und Lichtempfangselemente 32a beziehen, sondern nur auf die hier allerdings damit übereinstimmenden effektiven Sendepunkte als Ausgangspunkte der Sendelichtstrahlen 26 und Empfangspunkte als Endpunkte der remittierten Lichtstrahlen 28. Sendepunkte, Empfangspunkte sowie deren mögliche Anzahl, Anordnung und Erzeugung werden im Anschluss an die allgemeine Beschreibung des Sensors 10 unter Bezugnahme auf die Figuren 2 bis 3 in zahlreichen Ausführungsbeispielen näher erläutert.

Lichtsender 22 und Lichtempfänger 32 ist in dieser Ausführungsform gemeinsam auf einer Leiterkarte 34 angeordnet, die auf der Drehachse 18 liegt und mit der Welle 36 des Antriebs 16 verbunden ist. Dies ist nur beispielhaft zu verstehen, es sind praktisch beliebige Anzahlen und Anordnungen von Leiterkarten denkbar. Auch der optische Grundaufbau mit biaxial nebeneinanderliegendem Lichtsender 22 und Lichtempfänger 32 ist nicht zwingend und durch jede an sich von einstrahligen optoelektronischen Sensoren oder Laserscannern bekannte Bauform ersetzbar. Ein Beispiel dafür ist eine koaxiale Anordnung mit oder ohne Strahlteiler.

Eine berührungslose Versorgungs- und Datenschnittstelle 38 verbindet die bewegliche Abtasteinheit 12 mit der ruhenden Sockeleinheit 14. Dort befindet sich eine Steuer- und Auswertungseinheit 40, die zumindest teilweise auch auf der Leiterkarte 34 oder an anderem Ort in der Abtasteinheit 12 untergebracht sein kann. Die Steuer- und Auswertungseinheit 40 steuert den Lichtsender 22 und erhält die Empfangssignale des Lichtempfängers 32 zur weiteren Auswertung. Sie steuert außerdem den Antrieb 16 und erhält das Signal einer nicht gezeigten, von Laserscannern allgemein bekannten Winkelmesseinheit, welche die jeweilige Winkelstellung der Abtasteinheit 12 bestimmt.

Zur Auswertung wird vorzugsweise mit einem an sich bekannten Lichtlaufzeitverfahren die Distanz zu einem angetasteten Objekt gemessen. Zusammen mit der Information über die Winkelstellung von der Winkelmesseinheit stehen nach jeder Scanperiode mit Winkel und Entfernung zweidimensionale Polarkoordinaten aller Objektpunkte in einer Abtastebene zur Verfügung. Die jeweilige Abtastebene ist über die Identität des jeweiligen remittierten Lichtstrahls 28 und dessen Erfassung in einem der Lichtempfangselemente 32a ebenfalls bekannt, so dass insgesamt ein dreidimensionaler Raumbereich abgetastet wird.

Damit sind die Objektpositionen beziehungsweise Objektkonturen bekannt und können über eine Sensorschnittstelle 42 ausgegeben werden. Die Sensorschnittstelle 42 oder ein weiterer, nicht gezeigter Anschluss dienen umgekehrt als Parametrierschnittstelle. Der Sensor 10 kann auch als Sicherheitssensor für einen Einsatz in der Sicherheitstechnik zur Überwachung einer Gefahrenquelle ausgebildet sein, wie sie beispielsweise eine gefährliche Maschine darstellt. Dabei wird ein Schutzfeld überwacht, das während des Betriebs der Maschine vom Bedienpersonal nicht betreten werden darf. Erkennt der Sensor 10 einen unzulässigen Schutzfeldeingriff, etwa ein Bein einer Bedienperson, so löst er einen Nothalt der Maschine aus. In der Sicherheitstechnik eingesetzte Sensoren 10 müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Insbesondere kann dann die Sensorschnittstelle 42 als sichere Ausgabeschnittstelle (OSSD, Output Signal Switching Device) ausgebildet sein, um bei einem Schutzfeldeingriff durch ein Objekt ein sicherheitsgerichtetes Abschaltsignal auszugeben.

Der dargestellte Sensor 10 ist ein Laserscanner mit rotierendem Messkopf, nämlich der Abtasteinheit 12. Alternativ ist auch eine periodische Ablenkung mittels Drehspiegel oder einem Facettenspiegelrad denkbar. Bei mehreren Sendelichtstrahlen 26 hat das aber den Nachteil, dass es von der jeweiligen Drehstellung abhängt, wie die mehreren Sendelichtstrahlen 26 in den Überwachungsbereich 20 fallen, denn deren Anordnung rotiert durch den Drehspiegel, wie bekannte geometrische Überlegungen ergeben. Eine weitere alternative Ausführungsform schwenkt die Abtasteinheit 12 hin und her, entweder anstelle der Drehbewegung oder zusätzlich um eine zweite Achse senkrecht zur Drehbewegung, um auch in Elevation eine Abtastbewegung zu erzeugen. Weiterhin kann die Scanbewegung zur Erzeugung der Scanebene stattdessen auch mit anderen bekannten Methoden erzeugt werden, beispielsweise MEMS-Spiegeln, optical phased arrays oder akusto-optischen Modulatoren, insbesondere bei Ausführungsformen, in denen eine Lichtquelle mehrere Sendepunkte erzeugt.

Auch die Ausführung als Laserscanner ist beispielhaft. Es ist auch ein eindimensionaler Taster ohne periodische Bewegung möglich, der dann praktisch nur aus der ruhenden Abtasteinheit 12 mit entsprechender Elektronik, jedoch ohne Sockeleinheit 14 besteht.

Während der Rotation des Sensors 10 wird durch jeden der Sendelichtstrahlen 26 jeweils eine Fläche abgetastet. Nur bei einem Ablenkwinkel von 0°, also einem in Figur 1 nicht vorhandenen horizontalen Sendelichtstrahl, wird dabei eine Ebene des Überwachungsbereichs 20 abgetastet. Die übrigen Sendelichtstrahlen tasten die Mantelfläche eines Kegels ab, der je nach Ablenkwinkel unterschiedlich spitz ausgebildet ist. Bei mehreren Sendelichtstrahlen 26, die in unterschiedlichen Winkeln nach oben und unten abgelenkt werden, entsteht insgesamt als Abtastgebilde eine Art Schachtelung von mehreren Sanduhren. Auch diese Flächen werden hier manchmal vereinfachend als Abtastebenen bezeichnet.

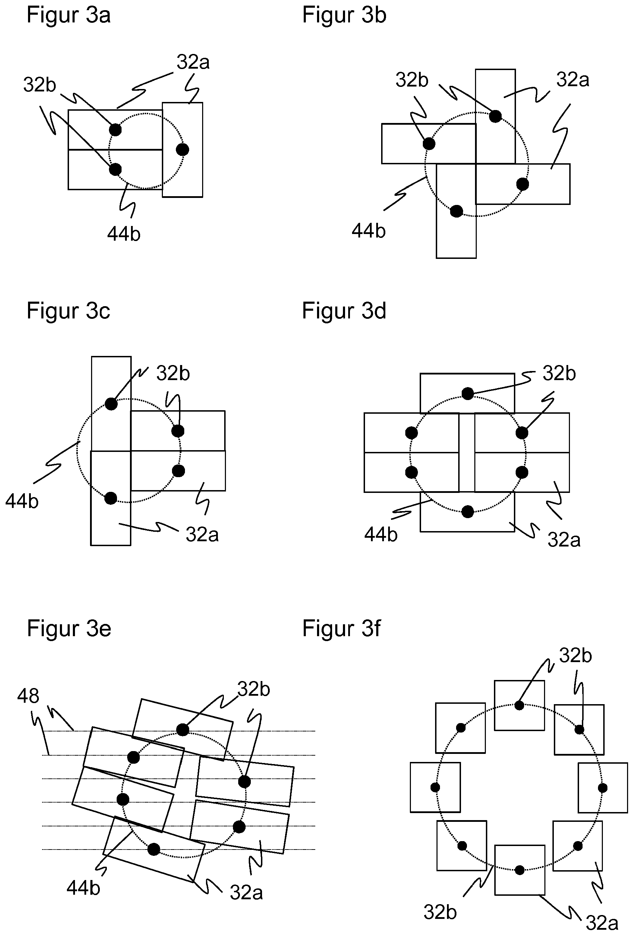

Die Figuren 2a-c zeigen in einer Draufsicht, einer Seitenansicht und einer perspektivischen Ansicht eine beispielhafte Anordnung von Sendepunkten 22b auf einer Kreislinie 44a. In diesem Beispiel handelt es sich um drei Sendepunkte 22b und damit Sendelichtstrahlen 26. Anschließend in Figur 3 werden noch weitere Ausführungsformen mit anderer Anzahl und Anordnung vorgestellt. Die Bezugnahme auf die Sendeseite ist willkürlich, da eine entsprechende Anordnung alternativ oder kumulativ ebenso auf der Empfangsseite möglich ist. Es müssen lediglich die Begriffe Lichtsender 22, Lichtquelle 22a, Sendepunkt 22b, Sendeoptik 24, Sendelichtstrahl 26 und Emissionsfläche durch Lichtempfänger 32, Lichtempfangselement 32a, Empfangspunkt 32b, Empfangsoptik 30, remittierter Lichtstrahl 26 und lichtempfindliche Fläche ersetzt werden. Um dies zu unterstreichen, wird dieser Austausch der Begrifflichkeiten zu Figur 3 vorgenommen, die sich auf die Empfangsseite bezieht. Es ist nach dem Gesagten klar, dass ebenso Figur 2 anhand der Empfangsseite oder Figur 3 anhand der Sendeseite erläutert werden könnte.

Im Zusammenhang mit Figur 1 wurde schon kurz auf den Unterschied zwischen einer Lichtquelle 22a und einem Sendepunkt 22b eingegangen. Ein Sendepunkt 22b ist der Ausgangspunkt eines Sendelichtstrahls 26. Das kann zugleich der Ort einer physischen Lichtquelle 22a sein. Zum einen weist aber eine Lichtquelle 22a als Halbleiterbauteil auch eine gewisse, hier quadratische Grundfläche auf, die größer ist als die Emissionsfläche selbst. Außerdem ist es möglich, mit ein und derselben physischen Lichtquelle 22a Sendelichtstrahlen aus mehreren Sendepunkten 22b zu erzeugen. Dafür werden im Anschluss an die Erläuterungen zu Figur 2 und 3 noch Beispiele gegeben. Entsprechendes gilt für Empfangspunkte 32b.

Vorzugsweise durchstößt wie im Beispiel der Figur 2 die optische Mittelachse der Sendeoptik 24 den Mittelpunkt der Kreislinie 44a. Aufgrund der Anordnung der Sendepunkte 22b auf der Kreislinie 44a haben alle Sendelichtstrahlen 26 denselben Feldwinkel. Die Bildfeldkrümmung ist effektiv entfernt.

Es ist auch vorteilhaft, wenn die in Figur 2c gezeigte Ebene 46 der Kreislinie 44a senkrecht zur optischen Achse der Sendeoptik 24 orientiert ist. Eine Neigung der Ebene 46 ist zwar nicht ausgeschlossen. Dann wird aber effektiv, nämlich aus Sicht der Sendeoptik 24, möglicherweise keine Kreislinie 44a verwirklicht, sondern nur eine Ellipse, die je nach Neigung der Ebene 46 schlechtere optische Eigenschaften nach sich zieht. In Figur 2c deuten Pfeile an den Sendelichtstrahlen 26 die Scanbewegung eines Laserscanners an.

Strenggenommen sind die Sendepunkte 22b keine mathematischen Punkte, sondern haben eine endliche Ausdehnung, so dass nur ein Teil und insbesondere die Mittelpunkte auf der Kreislinie 44a angeordnet werden kann. Die übrige Emissionsfläche befindet sich jedoch in unmittelbarer Nachbarschaft, so dass ein nennenswerter Vorteil durch Verringerung der Abbildungsunschärfe durch Bildfeldkrümmung erreicht wird.

Die Figuren 3a-f zeigen diverse, nicht abschließende Beispiele für die Anordnung von Empfangspunkten 32b auf einer Kreislinie 44b. Es wurde mehrfach darauf hingewiesen, dass vergleichbare Anordnungen auch sendeseitig denkbar sind. Zumindest in der biaxialen Anordnung gemäß Figur 1 liegen die Empfangspunkte 32b notwendig auf einer anderen Kreislinie 44b als der Kreislinie 44a der Sendepunkte 22b.

Figur 3a ist ein Beispiel mit drei Empfangspunkten 32b ähnlich Figur 2a, jedoch hier mit rechteckiger Grundfläche der Lichtempfangselemente 32a. Durch Drehen eines Lichtempfangselements 32a gegenüber den übrigen Lichtempfangselementen 32a um 90° kann eine kleine Grundfläche und gleichmäßige Anordnung der Empfangspunkte 32b erreicht werden.

Figur 3b ist ein Beispiel mit vier Empfangspunkten 32b. Erneut werden Lichtempfangselemente 32a um 90° verdreht, damit eine kompakte Anordnung ermöglicht ist. Es ist denkbar, Lücken zwischen den Lichtempfangselementen 32a vorzusehen, beispielsweise damit die Empfangspunkte 32b in Höhenrichtung gleichmäßig verteilt liegen. Das ermöglicht äquidistant beabstandete Abtaststrahlen und in einem Laserscanner Abtastebenen.

Figur 3c zeigt an einem weiteren Beispiel mit vier Empfangspunkten 32b, dass es möglich ist und sogar vorteilhaft sein kann, von einer quadratischen und/oder rechteckigen Anordnung der Empfangspunkte 32b abzuweichen. In diesem Fall wird dadurch eine im Vergleich zur Anordnung gemäß Figur 3b kleinere Gesamtausdehnung erzielt, gemessen an einem umschreibenden Rechteck oder der horizontalen Richtung.

Die Figuren 3d und 3e sind Beispiele mit sechs Empfangspunkten 32b. Dabei illustriert Figur 3e eine weitere mögliche Verdrehung der Bauteile, also hier der Lichtempfangselemente 32a. Dabei ist zum einen die Gesamtanordnung gegenüber der Kreislinie 44b oder deren Mittelpunkt beziehungsweise einen beispielsweise vertikalen Durchmesser verdreht. Außerdem sind auch einzelne Lichtempfangselemente 32a gegeneinander verdreht, damit sie Platz finden und zugleich die Empfangspunkte 32b in Höhenrichtung gleichmäßig verteilt werden. Horizontale gestrichelte Linien 48 deuten die dadurch ermöglichten äquidistanten Abtastebenen eines Laserscanners an.

Figur 3f schließlich ist ein Beispiel mit acht Empfangspunkten 32b. Außerdem sind hier die Grundflächen quadratisch, um zu unterstreichen, dass die Erfindung auf keine bestimmte Grundfläche festgelegt ist.

Aus den Beispielen wird klar, dass die Bauteile in gleichmäßigen Abständen auf der Kreislinie 44b und/oder in einer Höhenrichtung gleichmäßig beabstandet angeordnet sein können, aber nicht müssen. Außerdem sind diverse Anzahlen 3, 4, 5, 6, 7, 8, ...16 und mehr denkbar.

In der Ausführungsform nach Figur 1 wird jeder Sendepunkt 22b durch eine eigene Lichtquelle 22a und jeder Empfangspunkt 32b durch ein eigenes Lichtempfangselement 32a verwirklicht. Davon kann alternativ auf verschiedenste Weise abgewichen werden. Dieselbe Lichtquelle 22a kann durch ein Strahlteilerelement oder dergleichen Sendelichtstrahlen 26 aus mehreren oder sogar allen Sendepunkten 22b erzeugen. Die Lichtquelle 22a kann mechanisch bewegt werden, um nacheinander Sendelichtstrahlen 26 aus mehreren oder sogar allen Sendepunkten 22b zu erzeugen. Der Sendelichtstrahl 26 kann auch ohne mechanische Bewegung der Lichtquelle 22a die Kreislinie 44a oder einen Teil davon abfahren, etwa mittels MEMS-Spiegel, optical phased array oder akusto-optischem Modulator.

Mehrere Empfangspunkte 32b wiederum können ebenso durch separate Lichtempfangselemente 32a wie durch Pixel oder Pixelbereiche einer integrierten Mehrfachanordnung von Lichtempfangselementen 32a erreicht werden. Auch auf Empfangsseite ist eine mechanische Bewegung eines Lichtempfangselements 32a längs der Kreislinie 44b oder eines Teils davon oder eine entsprechende Ablenkung der remittierten Lichtstrahlen 26 mittels bewegtem MEMS-Spiegel oder dergleichen denkbar. In einer weiteren Ausführungsform wird das Empfangslicht mehrerer oder aller Empfangspunkte 32b auf ein gemeinsames Lichtempfangselement geführt. Um dennoch die Identität des jeweiligen remittierten Lichtstrahls 28 feststellen zu können, ist ein Multiplexing mit sequentieller Aktivierung von Sendelichtstrahlen 26 oder über eine zeitliche Codierung der Mehrfachpulsfolge der Sendestrahlen möglich.

Die Erfindung lässt alle diese Ausführungsformen von Anordnungen auf einer Kreislinie 44a-b sendeseitig, empfangsseitig oder auf beiden Seiten zu.

Besonders vorteilhaft ist die Erfindung bei einer Sendeoptik 24 beziehungsweise Empfangsoptik 30, die aus nur einer einzigen Linse besteht. Das macht die Optiken besonders einfach und erlaubt eine kleine Blendenzahl, und der an sich bestehende Nachteil großer Abbildungsfehler insbesondere durch Bildfeldkrümmung ist durch die Erfindung zumindest weitgehend kompensiert. Dennoch ist eine erfindungsgemäße Kreisanordnung auch einer Anordnung einer Einzellinse mit abgesetzter Blende (Landscape Lens), bei zwei- oder mehrlinsigen Optiken oder Abbildungsobjektiven vorteilhaft.

Einzelne Lichtquellen 22a und/oder Lichtempfangselemente 32a können mitsamt ihrem (SMD-)Gehäuse in Kreisanordnung auf eine Leiterplatte platziert werden. Alternativ werden die bloßen Halbleiter-Chips in Kreisanordnung in ein gemeinsames Gehäuse (sub-mount) gepackt. Damit sind dann Kreise mit kleinerem Durchmesser oder bei gleichem Durchmesser mehr Sendepunkte 22b beziehungsweise Empfangspunkte 32b möglich und damit mehr Abtastwinkel oder Abtastebenen. Es ist auch denkbar, das die kreisförmig angeordneten Sender/Empfänger auf einem gemeinsamen Halbleiter-Chip sitzen. Diese Bauform nähert sich dann der Bauform des Empfangs-Imagers an.

## Patentansprüche

1. Optoelektronischer Sensor (10) zur Erfassung von Objekten in einem Überwachungsbereich (20), der mindestens einen Lichtsender (22) zum Aussenden mehrerer voneinander separierter Lichtstrahlen (26) ausgehend von jeweils einem Sendepunkt (22b), eine gemeinsame Sendeoptik (24) für die ausgesandten Lichtstrahlen (26), mindestens einen Lichtempfänger (32) zum Erzeugen eines jeweiligen Empfangssignals aus den von Objekten zurückgeworfenen und in jeweils einem Empfangspunkt (32b) auftreffenden remittierten Lichtstrahlen (28), eine gemeinsame Empfangsoptik (30) für die remittierten Lichtstrahlen (28) und eine Auswertungseinheit (40) aufweist, die dafür ausgebildet ist, aus einer Lichtlaufzeit zwischen Aussenden der Lichtstrahlen (26) und Empfangen der remittierten Lichtstrahlen (28) einen Abstand des Objekts zu bestimmen,
**dadurch gekennzeichnet,**
**dass** die Sendepunkte (22b) auf einer ersten Kreislinie (44a) und/oder die Empfangspunkte (32b) auf einer zweiten Kreislinie (44b) angeordnet sind und dass die erste Kreislinie (44a) um die optische Mittelachse der Sendeoptik (24) und/oder die zweite Kreislinie (44b) um die optische Mittelachse der Empfangsoptik (30) zentriert ist.

2. Sensor (10) nach Anspruch 1,
wobei die Ebene (46) der ersten Kreislinie (44a) senkrecht zur optischen Mittelachse der Sendeoptik (24) und/oder die Ebene (46) der zweiten Kreislinie (44b) senkrecht zur optischen Mittelachse der Empfangsoptik (30) liegt.

3. Sensor (30) nach einem der vorhergehenden Ansprüche,
wobei die Sendepunkte (22b) gleichmäßig auf der ersten Kreislinie (44a) und/oder die Empfangspunkte (32b) gleichmäßig auf der zweiten Kreislinie (44b) verteilt sind.

4. Sensor (10) nach einem der vorhergehenden Ansprüche,
wobei der mindestens eine Lichtsender (22) drei, fünf oder mehr Lichtstrahlen (26) erzeugt oder wobei der mindestens eine Lichtsender (22) vier Lichtstrahlen (26) erzeugt und die Sendepunkte (22b) und/oder die Empfangspunkte (32b) nicht zu einem Quadrat oder Rechteck angeordnet sind.

5. Sensor (10) nach einem der vorhergehenden Ansprüche,
der eine Vielzahl von Lichtsendern (22a) aufweist, insbesondere einen Lichtsender (22a) je Sendepunkt (22b), und/oder der eine Vielzahl von Lichtempfängern (32a) aufweist, insbesondere einen Lichtempfänger (32a) je Empfangspunkt (32b).

6. Sensor (10) nach Anspruch 5,
wobei die Lichtsender (22) und/oder Lichtempfänger (32) ein Bauteil mit einer Grundfläche bilden, insbesondere einer rechteckigen oder quadratischen Grundfläche, und wobei die Grundflächen zumindest teilweise gegenüber einem Durchmesser der Kreislinie (44a-b) oder gegeneinander verdreht sind.

7. Sensor (10) nach einem der vorhergehenden Ansprüche,
wobei dem Lichtsender (22) ein Strahlteilerelement zugeordnet ist, um dessen Licht in mehrere ausgesandte Lichtstrahlen (26) aufzuspalten.

8. Sensor (10) nach einem der vorhergehenden Ansprüche,
wobei der Lichtsender (22) dafür ausgebildet ist, mehrere voneinander separierte Lichtstrahlen (26) nacheinander durch Bewegen eines Lichtstrahls an mehrere Sendepunkte (22b) zu erzeugen.

9. Sensor (10) nach einem der vorhergehenden Ansprüche,
wobei der Lichtempfänger (32) ortsaufgelöst ist und mehrere aktive Bereiche an den Empfangspunkten (32b) aufweist
oder wobei der Lichtempfänger (32) nur ein lichtempfindliches Element (32a) aufweist, das mehrere oder alle Empfangspunkte (32b) abdeckt, wobei der Lichtsender (22) für ein Multiplexing, bei dem jeweils nur einer der ausgesandten Lichtstrahlen (26) aktiv ist, oder für eine Codierung ausgebildet ist.

10. Sensor (10) nach einem der vorhergehenden Ansprüche,
wobei Lichtsender (22) und Lichtempfänger (32) eine koaxiale Anordnung bilden und Sendeoptik (24) und Empfangsoptik (30) in einer gemeinsamen Optik zusammengefasst sind

11. Sensor (10) nach einem der vorhergehenden Ansprüche,
wobei die Sendeoptik (24) und/oder die Empfangsoptik (30) eine Linse aufweist.

12. Sensor (10) nach einem der vorhergehenden Ansprüche,
der als Laserscanner ausgebildet ist und eine bewegliche Ablenkeinheit (12) aufweist, mit deren Hilfe die ausgesandten Lichtstrahlen (26) periodisch durch den Überwachungsbereich (20) geführt werden, wobei insbesondere die Ablenkeinheit (12) in Form einer drehbaren Abtasteinheit (12) ausgebildet ist, in welcher der Lichtsender (22) untergebracht ist.

13. Verfahren zur Erfassung von Objekten in einem Überwachungsbereich (20), bei dem mehrere voneinander separierte Lichtstrahlen (26) ausgehend von jeweils einem Sendepunkt (22b) durch eine gemeinsame Sendeoptik (24) ausgesandt werden, aus den von Objekten zurückgeworfenen und nach Durchtritt durch eine Empfangsoptik (30) in jeweils einem Empfangspunkt (32b) auftreffenden remittierten Lichtstrahlen (28) ein jeweiliges Empfangssignal erzeugt wird und die Empfangssignale ausgewertet werden, um aus einer Lichtlaufzeit zwischen Aussenden der Lichtstrahlen (26) und Empfangen der remittierten Lichtstrahlen (28) einen Abstand des Objekts zu bestimmen,
**dadurch gekennzeichnet,**
**dass** die Sendepunkte (22b) auf einer ersten Kreislinie (44a) und/oder die Empfangspunkte (32b) auf einer zweiten Kreislinie (44b) angeordnet sind und dass die erste Kreislinie (44a) um die optische Mittelachse der Sendeoptik (24) und/oder die zweite Kreislinie (44b) um die optische Mittelachse der Empfangsoptik (30) zentriert ist.

## Claims

1. An optoelectronic sensor (10) for detecting objects in a monitoring area (20), comprising at least one light transmitter (22) for transmitting a plurality of light beams (26) separated from one another, each starting from a transmission point (22b), common transmission optics (24) for the transmitted light beams (26), at least one light receiver (32) for generating a respective reception signal from the remitted light beams (28) remitted by objects and impinging in a respective receiving point (32b), common receiving optics (30) for the remitted light beams (28), and an evaluation unit (40) which is configured to determine a distance of the object from a light time of flight between transmission of the light beams (26) and reception of the remitted light beams (28),
**characterized in that** the transmission points (22b) are arranged on a first circular line (44a) and/or the receiving points (32b) are arranged on a second circular line (44b), and **in that** the first circular line (44a) is centered with respect to the optical center axis of the transmission optics (24) and/or the second circular line (44b) is centered with respect to the optical center axis of the receiving optics (30).

2. The sensor (10) according to claim 1,
wherein the plane (46) of the first circular line (44a) is perpendicular to the optical center axis of the transmission optics (24) and/or the plane (46) of the second circular line (44b) is perpendicular to the optical center axis of the receiving optics (30).

3. The sensor (30) according to any of the preceding claims,
wherein the transmission points (22b) are evenly distributed on the first circular line (44a) and/or the receiving points (32b) are evenly distributed on the second circular line (44b).

4. The sensor (30) according to any of the preceding claims,
wherein the at least one light transmitter (22) generates three, five or more light beams (26) or wherein the at least one light transmitter (22) generates four light beams (26) and the transmission points (22b) and/or the receiving points (32b) are not arranged in a square or rectangle.

5. The sensor (30) according to any of the preceding claims,
comprising a plurality of light transmitters (22a), in particular one light transmitter (22a) per transmission point (22b), and/or comprising a plurality of light receivers (32a), in particular one light receiver (32a) per receiving point (32b).

6. The sensor (10) according to claim 5,
wherein the light transmitters (22) and/or light receivers (32) form a component with a base area, in particular a rectangular or square base area, and wherein the base areas are at least partially rotated with respect to a diameter of the circular line (44a-b) or with respect to one another.

7. The sensor (30) according to any of the preceding claims,
wherein a beam splitter element is associated with the light transmitter (22) in order to split its light into a plurality of transmitted light beams (26).

8. The sensor (30) according to any of the preceding claims,
wherein the light transmitter (22) is configured to generate a plurality of separated light beams (26) in succession by moving a light beam to a plurality of transmission points (22b).

9. The sensor (30) according to any of the preceding claims,
wherein the light receiver (32) is spatially resolved and comprises a plurality of active regions at the receiving points (32b),
or wherein the light receiver (32) has only one light-sensitive element (32a) which covers a plurality or all of the receiving points (32b), wherein the light transmitter (22) is configured for multiplexing, with only one of the transmitted light beams (26) being active at any one time, or for using a code.

10. The sensor (30) according to any of the preceding claims,
wherein light transmitter (22) and light receiver (32) form a coaxial arrangement and transmission optics (24) and receiving optics (30) are combined in a common optics.

11. The sensor (30) according to any of the preceding claims,
wherein the transmission optics (24) and/or the receiving optics (30) comprise a lens.

12. The sensor (30) according to any of the preceding claims,
which is configured as a laser scanner and comprises a movable deflection unit (12) which is used to periodically guide the transmitted light beams (26) through the monitoring area (20), the deflection unit (12) in particular being configured in the form of a rotatable scanning unit (12) wherein the light transmitter (22) is accommodated.

13. A method for detecting objects in a monitoring area (20), wherein a plurality of light beams (26) separated from one another are transmitted through common transmission optics (24), each starting from a transmission point (22b), a respective reception signal is generated from the remitted light beams (28) remitted by objects and impinging in a respective receiving point (32b) after passing through receiving optics (30), and the reception signals are evaluated in order to determine a distance of the object from a light time of flight between transmission of the light beams (26) and reception of the remitted light beams (28), **characterized in that** the transmission points (22b) are arranged on a first circular line (44a) and/or the receiving points (32b) are arranged on a second circular line (44b), and **in that** the first circular line (44a) is centered with respect to the optical center axis of the transmission optics (24) and/or the second circular line (44b) is centered with respect to the optical center axis of the reception optics (30).

## Revendications

1. Capteur optoélectronique (10) pour la détection d'objets dans une zone à surveiller (20), comprenant au moins un émetteur de lumière (22) pour émettre plusieurs faisceaux lumineux (26), séparés les uns des autres, à partir d'un point d'émission (22b) respectif, une optique d'émission (24) commune pour les faisceaux lumineux émis (26), au moins un récepteur de lumière (32) pour générer un signal de réception respectif à partir des faisceaux lumineux réémis (28), réfléchis par des objets et arrivant en un point de réception respectif (32b), une optique de réception (30) commune pour les faisceaux lumineux réémis (28), et une unité d'évaluation (40) réalisée pour déterminer une distance de l'objet à partir d'un temps de parcours de lumière entre l'émission des faisceaux lumineux (26) et la réception des faisceaux lumineux réémis (28),
**caractérisé en ce que**
les points d'émission (22b) sont disposés sur une première ligne circulaire (44a) et/ou les points de réception (32b) sont disposés sur une deuxième ligne circulaire (44b), et **en ce que**
la première ligne circulaire (44a) est centrée autour de l'axe optique central de l'optique d'émission (24), et/ou la deuxième ligne circulaire (44b) est centrée autour de l'axe optique central de l'optique de réception (30).

2. Capteur (10) selon la revendication 1,
dans lequel le plan (46) de la première ligne circulaire (44a) est perpendiculaire à l'axe optique central de l'optique d'émission (24), et/ou le plan (46) de la deuxième ligne circulaire (44b) est perpendiculaire à l'axe optique central de l'optique de réception (30).

3. Capteur (30) selon l'une des revendications précédentes,
dans lequel les points d'émission (22b) sont répartis régulièrement sur la première ligne circulaire (44a), et/ou les points de réception (32b) sont répartis régulièrement sur la deuxième ligne circulaire (44b).

4. Capteur (10) selon l'une des revendications précédentes,
dans lequel ledit au moins un émetteur de lumière (22) génère trois, cinq ou plusieurs faisceaux lumineux (26), ou ledit au moins un émetteur de lumière (22) génère quatre faisceaux lumineux (26), et les points d'émission (22b) et/ou les points de réception (32b) ne sont pas disposés en un carré ou en un rectangle.

5. Capteur (10) selon l'une des revendications précédentes,
qui présente une multitude d'émetteurs de lumière (22a), en particulier un émetteur de lumière (22a) par point d'émission (22b), et/ou qui présente une multitude de récepteurs de lumière (32a), en particulier un récepteur de lumière (32a) par point de réception (32b).

6. Capteur (10) selon la revendication 5,
dans lequel les émetteurs de lumière (22) et/ou les récepteurs de lumière (32) forment un composant avec une surface de base, en particulier une surface de base rectangulaire ou carrée, et les surfaces de base sont au moins partiellement tournées par rapport à un diamètre de la ligne circulaire (44a-b) ou les unes par rapport aux autres.

7. Capteur (10) selon l'une des revendications précédentes,
dans lequel un élément diviseur de faisceau est associé à l'émetteur de lumière (22) afin de diviser sa lumière en plusieurs faisceaux lumineux émis (26).

8. Capteur (10) selon l'une des revendications précédentes,
dans lequel l'émetteur de lumière (22) est réalisé pour générer successivement plusieurs faisceaux lumineux (26), séparés les uns des autres, par déplacement d'un faisceau lumineux vers plusieurs points d'émission (22b).

9. Capteur (10) selon l'une des revendications précédentes,
dans lequel le récepteur de lumière (32) est à résolution spatiale et présente plusieurs zones actives aux points de réception (32b), ou
le récepteur de lumière (32) présente un seul élément photosensible (32a) qui couvre plusieurs ou tous les points de réception (32b), l'émetteur de lumière (22) étant réalisé pour un multiplexage dans lequel un seul des faisceaux lumineux émis (26) est actif, ou étant réalisé pour un codage.

10. Capteur (10) selon l'une des revendications précédentes,
dans lequel l'émetteur de lumière (22) et le récepteur de lumière (32) forment un agencement coaxial, et l'optique d'émission (24) et l'optique de réception (30) sont regroupées en une optique commune.

11. Capteur (10) selon l'une des revendications précédentes,
dans lequel l'optique d'émission (24) et/ou l'optique de réception (30) comporte(nt) une lentille.

12. Capteur (10) selon l'une des revendications précédentes,
qui est réalisé sous forme de scanner laser et qui présente une unité de déviation mobile (12) à l'aide de laquelle les faisceaux lumineux émis (26) sont périodiquement guidés à travers la zone à surveiller (20), en particulier l'unité de déviation (12) étant réalisée sous la forme d'une unité de balayage rotative (12) dans laquelle est logé l'émetteur de lumière (22).

13. Procédé de détection d'objets dans une zone à surveiller (20), dans lequel plusieurs faisceaux lumineux (26) séparés les uns des autres sont émis chacun à partir d'un point d'émission (22b) par une optique d'émission commune (24), un signal de réception respectif est généré à partir des faisceaux lumineux réémis (28) réfléchis par des objets et arrivant en un point de réception respectif (32b) après avoir traversé une optique de réception (30), et les signaux de réception sont évalués pour déterminer une distance de l'objet à partir d'un temps de parcours de lumière entre l'émission des faisceaux lumineux (26) et la réception des faisceaux lumineux réémis (28),
**caractérisé en ce que**
les points d'émission (22b) sont disposés sur une première ligne circulaire (44a), et/ou les points de réception (32b) sont disposés sur une deuxième ligne circulaire (44b), et **en ce que**
la première ligne circulaire (44a) est centrée autour de l'axe optique central de l'optique d'émission (24), et/ou la deuxième ligne circulaire (44b) est centrée autour de l'axe optique central de l'optique de réception (30).
